# EUROPÄISCHE PATENTANMELDUNG

(11) **EP 4 566 859 A1**
(43) Veröffentlichungstag der Anmeldung: **11.06.2025**
(21) Anmeldenummer: 23214908.8
(22) Anmeldetag: 07.12.2023
(51) Int. Cl.: B60K 1/04, B60K 1/00, B62D 25/20, B62D 21/15

(54) **KRAFTFAHRZEUG MIT TRAGSTRUKTUR UND HOCHVOLTBATTERIE**

(71) Anmelder: MAGNA STEYR Fahrzeugtechnik GmbH & Co KG, 8041 Graz (AT)
(72) Erfinder: LIENHART, Christian, 8054 Seiersberg (AT); SCHWARZL, Werner, 8301 Laßnitzhöhe (AT)
(74) Vertreter: Zangger, Bernd

(57) **Zusammenfassung**

Ein Kraftfahrzeug umfassend eine Tragstruktur, wobei die Tragstruktur zumindest zwei Längsträger (1) umfasst, ferner umfassend eine Hochvoltbatterie, wobei die Hochvoltbatterie einen die Hochvoltbatterie seitlich begrenzenden Rahmen (2) umfasst, wobei eine Vielzahl von Batteriezellen (3) im Rahmen (2) angeordnet sind, wobei der Rahmen (2) einstückig ausgebildet ist, wobei durch den einstückigen Rahmen (2) zumindest radial innen liegende Abschnitte der Längsträger (1) ausgebildet sind, wobei eine Trägerplatte (4) den, den Rahmen (2) an dessen Unterseite bedeckenden Boden der Hochvoltbatterie bildet, wobei die Batteriezellen (3) auf der Trägerplatte (4) befestigt sind, sowie ein Verfahren zur Herstellung eines solchen Kraftfahrzeugs.

## Beschreibung

### Gebiet der Erfindung

Die vorliegende Erfindung betrifft ein Kraftfahrzeug umfassend eine Tragstruktur und umfassend eine Hochvoltbatterie und ein Verfahren zur Herstellung eines solchen Kraftfahrzeugs.

### Stand der Technik

Es ist bekannt, dass geschlossene Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann einen geschlossenen Batteriekasten bzw. ein geschlossenes Batteriegehäuse, das die Zellmodule beherbergt. Eine solche Hochvoltbatterie wird mittels Schrauben am Fahrzeug befestigt. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

Batteriegehäuse können dabei Batterierahmen verwenden, die aus mehreren Einzelteilen bestehen und benachbart zu Querträgern, einem Unterfahrschutz, sowie einem Batteriedeckel verbaut sind. Das Batteriegehäuse wird in dem Unterboden befestigt und ist demontierbar. Die Dichtheit der Fahrzeugkarosserie wird über entsprechende Bauteile in der Bodengruppe sichergestellt und ist unabhängig vom Batteriegehäuse.

### Zusammenfassung der Erfindung

Es ist eine Aufgabe der Erfindung, ein Kraftfahrzeug mit einer Tragstruktur und einer Hochvoltbatterie anzugeben, dass einen geringen Bauraumbedarf hat, geringes Gewicht und geringe Herstellungskosten. Eine weitere Aufgabe ist es, ein einfaches und kostengünstiges Verfahren zur Montage der Hochvoltbatterie in einem solchen Kraftfahrzeug anzugeben.

Die Lösung der Aufgabe erfolgt durch ein Kraftfahrzeug umfassend eine Tragstruktur, wobei die Tragstruktur zumindest zwei Längsträger umfasst, ferner umfassend eine Hochvoltbatterie, wobei die Hochvoltbatterie einen die Hochvoltbatterie seitlich begrenzenden Rahmen umfasst, wobei eine Vielzahl von Batteriezellen im Rahmen angeordnet sind, wobei der Rahmen einstückig ausgebildet ist, wobei durch den einstückigen Rahmen zumindest radial innen liegende Abschnitte der Längsträger ausgebildet sind, wobei eine Trägerplatte den, den Rahmen an dessen Unterseite bedeckenden Boden der Hochvoltbatterie bildet, wobei die Batteriezellen auf der Trägerplatte befestigt sind.

Erfindungsgemäß verwendet eine Hochvoltbatterie als Batteriegehäuse einen einstückigen Rahmen, der nicht nur an den Längsträgern befestigt ist, sondern auch Abschnitte der Längsträger ausbildet. Zusätzlich verwendet das Batteriegehäuse eine Trägerplatte mit daran befestigten Batteriezellen als Boden des Batteriegehäuses. Durch diesen Aufbau wird einerseits der Bauraumbedarf der Hochvoltbatterie reduziert. Bei gleichem Bauraum kann der zur Verfügung stehende Platz im Hochvoltspeicher vergrößert werden und kann für mehr Batteriekapazität genützt werden. Es kommt zu einer Reduktion an Bauteilen und zu reduzierten Kosten und Gewicht. Eine vereinfachte Herstellung eines Kraftfahrzeuges wird dadurch ermöglicht. Die Trägerplatte kann unabhängig von der Tragstruktur und vom übrigen Kraftfahrzeug mit Batteriezellen bestückt werden und diese vormontierte Baugruppe an einem mit dem übrigen Kraftfahrzeug gefügten Rahmen befestigt werden.

Weiterbildungen der Erfindung sind in den abhängigen Ansprüchen, der Beschreibung sowie den beigefügten Zeichnungen angegeben.

Vorzugsweise ist die Trägerplatte abdichtend an dem Rahmen befestigt, bevorzugt mittels Dichtelement und Verschraubung.

Vorzugsweise bildet die Unterseite der Trägerplatte ein Unterfahrschutzblech des Kraftfahrzeugs aus. Hierdurch wird noch mehr Bauraum eingespart, nämlich in Fahrzeug Z-Richtung.

Bevorzugt bildet ein den Innenraum des Kraftfahrzeugs nach unten abschließendes Bodenblech des Kraftfahrzeugs den, den Rahmen an dessen Oberseite bedeckenden Deckel der Hochvoltbatterie aus. Das Batteriegehäuse wird dann durch Rahmen, Trägerplatte - als Boden - und Bodenblech - als Deckel - ausgebildet.

Vorzugsweise bildet der Rahmen an zumindest einem Abschnitt am unteren Ende des Rahmens einen Flansch aus. Der Rahmen ist durch den Flansch an einem anderen Kraftfahrzeugbauteil, insbesondere an einem weiteren Längsträgerbauteil, befestigt. Besonders bevorzugt bildet der Rahmen an zumindest einem Seitenbereich, in dem durch den Rahmen ein radial innen liegender Abschnitt des Längsträgers ausgebildet ist, am unteren Ende des Rahmens einen Flansch aus. Insbesondere kann im Wesentlichen der gesamte Rahmen am unteren Ende des Rahmens einen Flansch ausbilden.

Bevorzugt ist der Flansch seitlich neben der Befestigung der Trägerplatte an dem Rahmen, besonders bevorzugt seitlich neben dem Dichtelement und der Verschraubung, angeordnet.

Vorzugsweise ist der Flasch nach unten hin schräg nach außen verlaufend ausgebildet. Hierdurch ist es einfacher, die Trägerplatte, bevorzugt mit darauf montierten Batteriezellen, nachträglich und von unten in den Rahmen einzubringen und am Rahmen zu befestigen.

Bevorzugt sind Sitzquerträger an dem Deckel der Hochvoltbatterie befestigt.

Vorzugsweise sind durch den einstückigen Rahmen zumindest radial innen liegende Abschnitte zumindest eines Querträgers, bevorzugt zweier Querträger, ausgebildet. Vorzugsweise bilden die Abschnitte von Querträgern die im Kraftfahrzeug vorne und hinten liegenden Abschnitte des Rahmens aus und bilden die Abschnitte von Längsträgern die im Kraftfahrzeug links und rechts liegenden Abschnitte des Rahmens aus.

Bevorzugt werden die Batteriezellen direkt, vorzugsweise als einzelne Batteriezellen, in die Trägerplatte eingesetzt. Besonders bevorzugt bildet die Trägerplatte nach oben hin offene Taschen aus, in welche die Batteriezellen eingesetzt werden.

Ein Verfahren zur Herstellung eines Kraftfahrzeugs, wie zuvor beschrieben, kann vorsehen, dass die Batteriezellen auf der Trägerplatte befestigt werden und dass, unabhängig von der Montage der Batteriezellen auf der Trägerplatte, der Rahmen an einem anderen Kraftfahrzeugbauteil, insbesondere an einem weiteren Längsträgerbauteil montiert wird. Danach wird die Trägerplatte mit den befestigten Batteriezellen von unten in den bereits an einem anderen Kraftfahrzeugbauteil, insbesondere an einem weiteren Längsträgerbauteil, montierten Rahmen eingebracht und an diesem Rahmen befestigt.

### Kurzbeschreibung der Zeichnungen

Die Erfindung wird im Folgenden beispielhaft unter Bezugnahme auf die Zeichnungen beschrieben.
- Fig. 1: ist eine teilweise Schnittansicht eines erfindungsgemäßen Kraftfahrzeugs, geschnitten in Fahrzeug-X-Richtung.
- Fig. 2: ist eine teilweise Schnittansicht eines erfindungsgemäßen Kraftfahrzeugs, geschnitten in Fahrzeug-Y-Richtung.
- Fig. 3: ist eine teilweise Schnittansicht eines alternativen erfindungsgemäßen Kraftfahrzeugs, geschnitten in Fahrzeug-Y-Richtung.

### Detaillierte Beschreibung der Erfindung

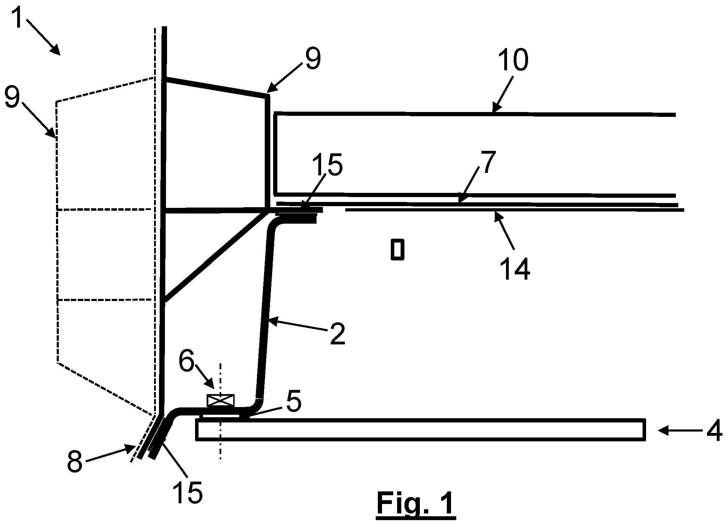

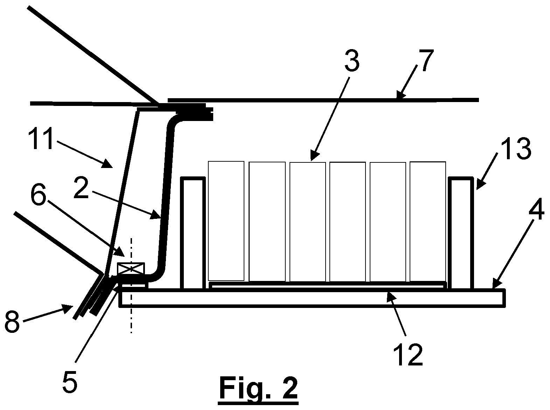

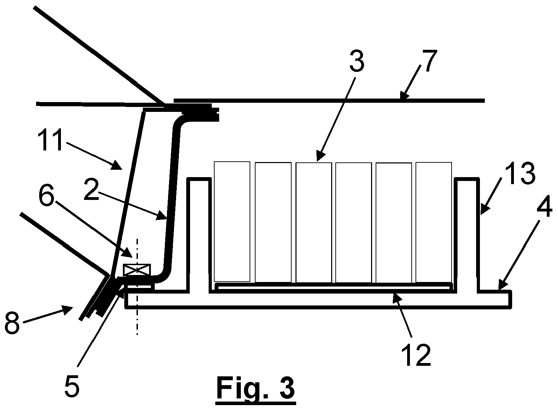

In Fig. 1 ist ein erfindungsgemäßes Kraftfahrzeug in einem Ausschnitt nahe einem Längsträger 1, also einem Schweller, gebildet aus den Bauteilen Rahmen 2 und weitere Längsträgerbauteile 9, dargestellt, wobei die Schnittdarstellung in Fahrzeug-X-Richtung geschnitten ist, also in einer Ebene die normal auf die X-Achse des Kraftfahrzeugs steht. Die Fig. 2 und Fig. 3 zeigen alternative Ausführungen eines erfindungsgemäßen Kraftfahrzeugs, geschnitten in Fahrzeug-Y-Richtung, also in einer Ebene die normal auf die Y-Achse des Kraftfahrzeugs steht.

Wie in Fig. 1 dargestellt umfasst das Kraftfahrzeug eine Tragstruktur, wobei die Tragstruktur zumindest zwei Längsträger 1 umfasst, ferner umfassend eine Hochvoltbatterie, wobei die Hochvoltbatterie einen die Hochvoltbatterie seitlich begrenzenden Rahmen 2 umfasst. Der ringförmige Rahmen 2 ist einstückig ausgebildet. Durch den einstückigen Rahmen 2 sind radial innen liegende Abschnitte der Längsträger 1, also der Schweller, ausgebildet, nämlich innen und unten liegende Abschnitte des Längsträgers 1. Innen oben liegende Abschnitte sowie außen liegende Abschnitte des Schwellers sind durch weitere Längsträgerbauteile 9 ausgebildet.

Der Rahmen 2 bildet die seitliche Begrenzung des Batteriegehäuses der Hochvoltbatterie. Der Der Rahmen 2 kann aus Stahl gebildet sein. Eine Trägerplatte 4 bildet den, den Rahmen 2 an dessen Unterseite bedeckenden Boden der Hochvoltbatterie und somit den Boden des Batteriegehäuses. Die Batteriezellen 3 sind, bevorzugt als einzelne Zellen, auf der Trägerplatte 4 befestigt, wie in den Fig. 2 und Fig. 3 dargestellt. Die Batteriezellen 3 können stehend auf der Trägerplatte 4 montiert sein. Eine Kühlplatte 12 kann zwischen Trägerplatte 4 und Batteriezellen 3 angeordnet sein. Die Batteriezellen 3 sind in dem Rahmen 2 angeordnet. Die Unterseite der Trägerplatte 4 bildet ein Unterfahrschutzblech des Kraftfahrzeugs aus.

Ein den Innenraum des Kraftfahrzeugs nach unten abschließendes Bodenblech 7 des Kraftfahrzeugs bildet den, den Rahmen 2 an dessen Oberseite bedeckenden Deckel der Hochvoltbatterie aus. Zwischen den Batteriezellen 3 und dem Deckel, also dem Bodenblech 7, kann ein Feuerschutzelement 14 angeordnet sein. Sitzquerträger 10 sind direkt an dem Deckel der Hochvoltbatterie befestigt.

Die Trägerplatte 4 kann, bevorzugt in Y-Richtung verlaufende, abstehende Leisten 13 aufweisen, zwischen welchen die Batteriezellen 3 angeordnet sind. Die Trägerplatte 4 kann mehrteilig ausgebildet sein, so dass beispielsweise die Leisten 13 an eine Grundplatte gefügt sind, wie in Fig. 2 dargestellt. Die Trägerplatte 4 kann einteilig ausgebildet sein, wie in Fig. 3 dargestellt und kann bevorzugt durch ein Gussbauteil gebildet sein.

Die Trägerplatte 4 ist abdichtend an dem Rahmen 2 befestigt, nämlich mittels Dichtelement 5, bevorzugt einer EPDM Dichtung (ethylene propylene diene monomer rubber), und mittels Verschraubung 6. Die Verschraubung 6 der Trägerplatte 4 am Gehäuse, nämlich am Rahmen 2, ist demontierbar.

Der Rahmen 2 bildet am unteren Ende des Rahmens einen Flansch 8 aus, wobei der Rahmen durch den Flansch 8 an einem anderen Kraftfahrzeugbauteil, nämlich an einem weiteren Längsträgerbauteil 9, befestigt ist, bevorzugt mittels Kleber 15 und Stanznieten. Der Rahmen 2 kann zusätzlich außerhalb des Flansches 8, insbesondere am oberen Ende des Rahmens 2, an einem anderen Kraftfahrzeugbauteil, bevorzugt an einem weiteren Längsträgerbauteil 9 befestigt sein, beispielsweise mittels Kleber 15 und Stanznieten, wie in Fig. 1 dargestellt.

Der Flansch 8 ist seitlich neben der Befestigung der Trägerplatte 4 an dem Rahmen 2, nämlich seitlich neben dem Dichtelement 5 und der Verschraubung 6, angeordnet.

Der Flasch 8 ist nach unten schräg nach außen verlaufend ausgebildet. Der Flansch ist bevorzugt um etwa 20 bis 40 Grad schräggestellt, vorzugsweise um etwa 30 Grad schräggestellt. Das Einbringen der Trägerplatte 4 von unten in den Rahmen 2 wird dadurch erleichtert.

Wie in Fig. 2 und 3 gezeigt, können durch den einstückigen Rahmen 2 radial innen liegende Abschnitte von Querträgern 11 ausgebildet sein, insbesondere eines vorne und eines hinten am Rahmen 2 liegenden Querträgers 11.

In einem Verfahren zur Herstellung eines Kraftfahrzeugs wie in Fig. 1 bis 3 dargestellt, werden die Batteriezellen 3 auf der Trägerplatte 4 befestigt und unabhängig davon, beispielsweise an einem anderen Ort, der Rahmen 2 an einem anderen Kraftfahrzeugbauteil, insbesondere an einem weiteren Längsträgerbauteil 9 montiert. Danach wird die Trägerplatte 4 mit den befestigten Batteriezellen 3 von unten an dem bereits an einem anderen Kraftfahrzeugbauteil, insbesondere an einem weiteren Längsträgerbauteil 9, montierten Rahmen 2 befestigt.

Die Erfindung beschreibt somit die Integration eines Hochvoltspeichers, hergestellt aus einem einteiligen umlaufenden Ring, nämlich Rahmen 2, der von unten in die Bodengruppe integriert wird und mit einer Trägerplatte 4, die mit Batteriezellen bestückt ist, von unten geschlossen wird, und somit eine Batterie bildet.

Bei dieser Bauweise wird ein einteiliger umlaufender Ring aus Stahl, Rahmen 2, von unten fix in den Rohbau gefügt. Der einteilige Ring ersetzt einerseits den Schweller innen unten, und stellt gleichzeitig das Batteriegehäuse dar.

Dieser Ring wird als letztes Element in die Baugruppe Unterboden eingebracht, was eine Schrägstellung des unteren Schwellerflansches, Flansch 8, notwendig macht, um einerseits den Kleber 15 nicht abzuscheren und andererseits eine Ausmittelung des Bauteiles möglich macht.

Der so entstandene Hohlraum dient als Bauraum für eine Antriebsbatterie, und wird von unten mittels demontierbarer Trägerplatte 4 verschlossen.

Die Trägerplatte 4 für die Batteriezellen 3 kann aus einer mehrteiligen Schweißkonstruktion bestehen, und in einer Ausführungsvariante auch als einteiliges Gussbauteil hergestellt werden.

Die Trägerplatte 4 bildet nach oben hin Taschen aus in denen die Batteriezellen 3 direkt eingesetzt werden können, ohne vorher als Module zusammengefasst werden zu müssen.

Die Vormontage der Trägerplatte 4 erfolgt bevorzugt im ausgebauten Zustand bei einem Lieferanten, und die Batterie wird mit einer Hochvoltabdeckung gesichert, angeliefert. Zuerst werden die Kühlplatten 12 in die Trägerplatte 4 eingelegt, anschließend werden die Zellen 3 von oben in die Trägerplatte 4 eingesetzt und elektrisch miteinander verbunden. Zum Schluss wird die Trägerplatte 4 und das Gehäuse miteinander verschraubt, mittels Verschraubung 6.

Ein wesentlicher Vorteil dieser Anordnung ist der Bauraumzugewinn in Y-Richtung um den Querschnitt den üblicherweise der Batterierahmen benötigt, sowie die Integration mehrerer Bauteile und die damit verbundene Einsparung an Kosten und Gewicht.

Eine Modulbauweise der Batteriezellen 3 kann bei dieser Bauweise auf einfache Weise durch eine cell-to-pack Anordnung ersetzt werden, wodurch eine höhere Energiedichte bei gleichem Bauraum realisiert werden kann.

Die Z-Maßkette wird ebenfalls kleiner aufgrund des fehlenden Luftspaltes zwischen Bodenplatte und Batteriegehäuse.

### Bezugszeichenliste

- 1: Längsträger
- 2: Rahmen
- 3: Batteriezellen
- 4: Trägerplatte
- 5: Dichtelement
- 6: Verschraubung
- 7: Bodenblech
- 8: Flansch
- 9: weiteres Längsträgerbauteil
- 10: Sitzquerträger
- 11: Querträger
- 12: Kühlplatte
- 13: Leisten
- 14: Feuerschutzelement
- 15: Kleber

## Patentansprüche

1. Kraftfahrzeug umfassend eine Tragstruktur, wobei die Tragstruktur zumindest zwei Längsträger (1) umfasst, ferner umfassend eine Hochvoltbatterie, wobei die Hochvoltbatterie einen die Hochvoltbatterie seitlich begrenzenden Rahmen (2) umfasst, wobei eine Vielzahl von Batteriezellen (3) im Rahmen (2) angeordnet sind,
**dadurch gekennzeichnet, dass** der Rahmen (2) einstückig ausgebildet ist, wobei durch den einstückigen Rahmen (2) zumindest radial innen liegende Abschnitte der Längsträger (1) ausgebildet sind, wobei eine Trägerplatte (4) den, den Rahmen (2) an dessen Unterseite bedeckenden Boden der Hochvoltbatterie bildet, wobei die Batteriezellen (3) auf der Trägerplatte (4) befestigt sind.

2. Kraftfahrzeug nach Anspruch 1,
**dadurch gekennzeichnet , dass** die Trägerplatte (4) abdichtend an dem Rahmen (2) befestigt ist, bevorzugt mittels Dichtelement (5) und Verschraubung (6).

3. Kraftfahrzeug nach zumindest einem der vorhergehenden Ansprüche,
**dadurch gekennzeichnet , dass** die Unterseite der Trägerplatte (4) ein Unterfahrschutzblech des Kraftfahrzeugs ausbildet.

4. Kraftfahrzeug nach zumindest einem der vorhergehenden Ansprüche,
**dadurch gekennzeichnet , dass** ein den Innenraum des Kraftfahrzeugs nach unten abschließendes Bodenblech (7) des Kraftfahrzeugs den, den Rahmen (2) an dessen Oberseite bedeckenden Deckel der Hochvoltbatterie ausbildet.

5. Kraftfahrzeug nach zumindest einem der vorhergehenden Ansprüche,
**dadurch gekennzeichnet , dass** der Rahmen (2) an zumindest einem Abschnitt am unteren Ende des Rahmens einen Flansch (8) ausbildet, wobei der Rahmen durch den Flansch (8) an einem anderen Kraftfahrzeugbauteil, insbesondere an einem weiteren Längsträgerbauteil (9), befestigt ist.

6. Kraftfahrzeug nach Anspruch 2 und Anspruch 5,
**dadurch gekennzeichnet , dass** der Flansch (8) seitlich neben der Befestigung der Trägerplatte (4) an dem Rahmen (2), bevorzugt seitlich neben dem Dichtelement (5) und der Verschraubung (6), angeordnet ist.

7. Kraftfahrzeug nach Anspruch 5 oder Anspruch 6,
**dadurch gekennzeichnet , dass** der Flasch (8) nach unten schräg nach außen verlaufend ausgebildet ist.

8. Kraftfahrzeug nach zumindest einem der vorhergehenden Ansprüche,
**dadurch gekennzeichnet , dass** Sitzquerträger (10) an dem Deckel der Hochvoltbatterie befestigt sind.

9. Kraftfahrzeug nach zumindest einem der vorhergehenden Ansprüche,
**dadurch gekennzeichnet , dass** durch den einstückigen Rahmen (2) zumindest radial innen liegende Abschnitte zumindest eines Querträgers (11), bevorzugt zweier Querträger (11), ausgebildet sind.

10. Kraftfahrzeug nach zumindest einem der vorhergehenden Ansprüche,
**dadurch gekennzeichnet , dass** die Batteriezellen (3) direkt in die Trägerplatte (4) eingesetzt werden, wobei bevorzugt die Trägerplatte (4) nach oben hin Taschen ausbildet, in welche die Batteriezellen (3) eingesetzt werden.

11. Verfahren zur Herstellung eines Kraftfahrzeugs nach zumindest einem der vorhergehenden Ansprüche,
**dadurch gekennzeichnet , dass** die Batteriezellen (3) auf der Trägerplatte (4) befestigt werden, dass der Rahmen (2) an einem anderen Kraftfahrzeugbauteil, insbesondere an einem weiteren Längsträgerbauteil (9) montiert wird, wobei danach die Trägerplatte (4) mit den befestigten Batteriezellen (3) von unten an dem bereits an einem anderen Kraftfahrzeugbauteil, insbesondere an einem weiteren Längsträgerbauteil (9), montierten Rahmen (2) befestigt wird.
